# EUROPÄISCHE PATENTSCHRIFT

(11) **EP 3 399 192 B1**
(45) Veröffentlichungstag und Bekanntmachung des Hinweises auf die Patenterteilung: **11.09.2019**
(21) Anmeldenummer: 18401044.5
(22) Anmeldetag: 26.04.2018
(51) Int. Cl.: F04C 29/00, F04B 39/10, F04B 27/10, F04B 39/12, F04D 29/40, F16L 19/04

(54) **KOMPRESSORGEHÄUSE**
COMPRESSOR HOUSING
CARTER DE COMPRESSEUR

(30) Priorität: 02.05.2017 DE 102017207366
(43) Veröffentlichungstag der Anmeldung: 07.11.2018
(73) Patentinhaber: MAN Energy Solutions SE, 86153 Augsburg (DE)
(72) Erfinder: Suter, Roger, 8052 Zürich (CH); Betschart, Michael, 6354 Vitznau (CH)

(56) Entgegenhaltungen:
- EP-A1- 2 390 504
- DE-A- 2 036 343
- JP-A- 2014 181 686
- US-A1- 2003 194 331
- US-A1- 2016 115 955

## Beschreibung

Die Erfindung betrifft ein Kompressorgehäuse. Weiterhin betrifft die Erfindung ein Verfahren zur Montage oder Demontage eines Gewinderings an einem zylinderartigen Gehäusegrundkörper des Kompressorgehäuses.

Kompressorgehäuse im Sinne der hier vorliegenden Erfindung kommen insbesondere an Kompressoren für industrielle Anlagen zur Anwendung, so zum Beispiel für Luftzerlegungsanlagen. Solche Kompressoren verfügen über ein Kompressorgehäuse sowie über ein im Kompressorgehäuse aufgenommenen bzw. gelagerten Rotor, der mehrere Kompressorstufen bereitstellt. Das Kompressorgehäuse verfügt über einen zylinderartigen Gehäusegrundkörper und an mindestens einem Ende, vorzugsweise an beiden gegenüberliegenden Enden, desselben über jeweils einen Deckel. Gehäusegrundkörper und Deckel definieren zusammen einen Innenraum des Kompressorgehäuses, in welchem ein zu verdichtendes Medium über den Rotor verdichtet wird. Das zu verdichtende Medium ist dem Kompressor über einen Zulauf des Kompressorgehäuses zuführbar und vom Kompressorgehäuse über einen Ablauf abführbar.

Bei aus der Praxis bekannten Kompressorgehäusen bereitet die Verbindung des oder jedes Deckels mit dem zylinderartigen Gehäusegrundkörper Schwierigkeiten. Daher sind die Gehäusegrundkörper der Kompressorgehäuse von aus der Praxis bekannten Kompressoren typischerweise relativ dick unter hohem Werkstoffeinsatz ausgeführt, um ein Versagen des Gehäusegrundkörpers im Anbindungsbereich des jeweiligen Deckels zu vermeiden. Hierdurch werden ein hohes Gewicht und hohe Kosten von Kompressorgehäusen verursacht.

Aus der DE 20 36 343 A ist ein Kompressorgehäuse nach dem Oberbegriff des Anspruch1 bekannt.

EP 2 390 504 A1 und US 2003/19431 A1 offenbaren weiteren Stand der Technik.

Hiervon ausgehend liegt der vorliegenden Erfindung die Aufgabe zugrunde, ein neuartiges Kompressorgehäuse zu schaffen. Ferner soll die Erfindung ein Verfahren zur Montage oder Demontage eines Gewinderings an einem zylinderartigen Gehäusegrundkörper des Kompressorgehäuses bereitstellen.

Diese Aufgabe wird durch ein Kompressorgehäuse nach Anspruch 1 gelöst.

Erfindungsgemäß weist das Kompressorgehäuse zur Bereitstellung eines Anschlags für den jeweiligen Deckel mindestens einen Gewindering mit einem Außengewinde auf, der über sein Außengewinde in das jeweilige ein Innengewinde aufweisende Ende des Gehäusegrundkörpers eingeschraubt ist. Dadurch, dass beim erfindungsgemäßen Kompressorgehäuse ein Gewindering, der über sein Außengewinde in ein Innengewinde am jeweiligen Ende des Gehäusegrundkörpers eingeschraubt ist, zur Montage des Deckels im Kompressorgehäuse genutzt wird, kann insbesondere der Gehäusegrundkörper in geringerer Wandstärke und demnach leichter und kostengünstiger ausgeführt werden.

Erfindungsgemäß ist der Gewindering über eine Verdrehsicherung gegenüber dem Gehäusegrundkörper des Kompressorgehäuses verdrehgesichert. Hiermit lässt sich der Gewindering am Gehäusegrundkörper des Kompressorgehäuses einfach sichern.

Nach einer ersten Variante weist die Verdrehsicherung mindestens ein Sicherungselement auf, wobei das jeweilige Sicherungselement über eine erste Schraube mit dem Gehäusegrundkörper und über eine zweite Schraube mit dem Gewindering zusammenwirkt, derart, dass sich die erste Schraube in den Gehäusegrundkörper und die zweite Schraube in dem Gewindering hinein erstreckt, wobei sich die zweite Schraube durch den Gewindering hindurch erstreckt und am Deckel abstützt.

Nach einer alternativen zweiten Variante weist die Verdrehsicherung einen Sicherungsring oder einen Sicherungssegmentring auf, wobei der Sicherungsring oder der Sicherungssegmentring abschnittsweise in eine radial innere Nut im Gewindering hineinragt, und wobei sich erste Schrauben durch einen aus der radial inneren Nut des Gewindering herausragenden Abschnitt des Sicherungsrings oder des Sicherungssegmentrings hindurch erstecken und auf dem Deckel abstützen.

Beide Varianten stellen eine vorteilhafte Verdrehsicherung für den Gewindering am Kompressorgehäuse bereit. Die erste Variante ist dabei besonders bevorzugt, da dieselbe konstruktiv besonders einfach ist.

Das Verfahren zur Montage oder Demontage des Gewinderings an dem zylinderartigen Gehäusegrundkörper des Kompressorgehäuses ist in Anspruch 7 oder Anspruch 10 definiert. Ein Montagering zur Durchführung des Verfahrens nach Anspruch 7 ist in Anspruch 8 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen ausschnittsweisen Querschnitt in Axialrichtung durch ein erstes erfindungsgemäßes Kompressorgehäuse eines Kompressors im Bereich eines Endes des Kompressorgehäuses;
- Fig. 2: einen ausschnittsweisen Querschnitt in Axialrichtung durch ein zweites erfindungsgemäßes Kompressorgehäuse eines Kompressors im Bereich eines Endes des Kompressorgehäuse;
- Fig. 3: das Kompressorgehäuse bei einer Montage oder Demontage des Gewinderings nach einem ersten erfindungsgemäßen Verfahren;
- Fig. 4: das Kompressorgehäuse bei einer Montage oder Demontage des Gewinderings nach einem zweiten erfindungsgemäßen Verfahren
- Fig. 5: das Kompressorgehäuse bei einer Montage oder Demontage des Gewinderings nach einer Variante des zweiten erfindungsgemäßen Verfahrens.

Die hier vorliegende Erfindung betrifft ein Kompressorgehäuse eines Kompressors, insbesondere eines Kompressors für industrielle Anwendungen. Ferner betrifft die Erfindung ein Verfahren zur Montage und Demontage eines solchen Kompressorgehäuses.

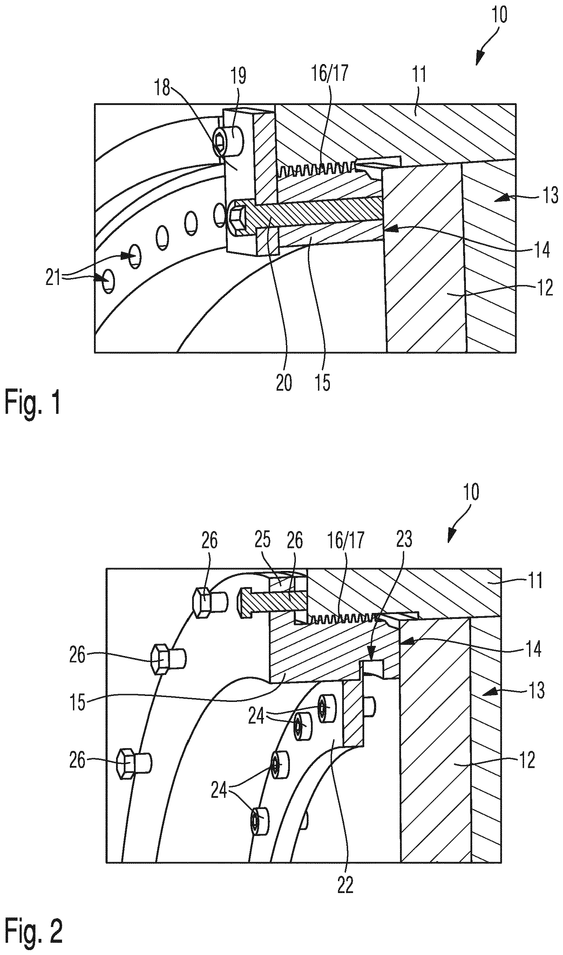

Ein Kompressor verfügt über ein Kompressorgehäuse 10 sowie einen im Kompressorgehäuse 10 aufgenommenen Rotor, der typischerweise mehrere Kompressorstufen bereitstellt. In Fig. 1 ist ein Ausschnitt aus dem Kompressorgehäuse 10 ohne Rotor gezeigt, und zwar im Bereich eines Endes eines zylinderartigen Gehäusegrundkörpers 11 in das ein Deckel 12 am gezeigten Ende eingesetzt ist. Aufgrund des in einem Innenraum 13 des Kompressorgehäuses 10 herrschenden Drucks wird der Deckel 12 gegen einen Anschlag 14 gedrückt, der beim erfindungsgemäßen Kompressorgehäuse 10 von einem Gewindering 15 bereitgestellt ist. Der Gewindering 15 verfügt über ein Außengewinde 16, welches mit einem an dem in Fig. 1 gezeigten Ende des Gehäusegrundkörpers 11 ausgebildeten Innengewinde 17 zusammenwirkt, nämlich derart, dass der Gewindering 15 über sein Außengewinde 16 in das Innengewinde 17 am in Fig. 1 gezeigten Ende des zylinderartigen Gehäusegrundkörpers 11 einschraubbar bzw. eingeschraubt ist. Dies erlaubt eine besonders einfache Bereitstellung des Anschlags 14 für den Deckel 12 bei geringen Wandstärken im Bereich des zylinderartigen Gehäusegrundkörpers 11. Ausgehend vom Deckel 12 auf den Anschlag 14 und damit den Gewindering 15 übertragene Axialkräfte können über die Gewindesteigungen optimal in den Gehäusegrundkörper 11 abgeleitet werden.

Der Gewindering 15 verfügt vorzugsweise über eine größere Härte als der zylinderartige Gehäusegrundkörper 11. Sowohl Gehäusegrundkörper 11 als auch Gewindering 15 bestehen vorzugsweise aus Stahl, als Werkstoff für den Gewindering 15 eignet sich insbesondere die Legierung 42CrMo4.

Für das Außengewinde 16 des Gewinderings 15 und das Innengewinde 17 des zylinderartigen Gehäusegrundkörpers 11 können beliebige Gewindearten genutzt werden, vorzugsweise sind die Gewinde 16, 17 derart ausgeführt, dass dieselben eine nicht selbsthemmende Gewindeverschraubung des Gewinderings 15 mit dem zylinderartigen Gehäusegrundkörper 11 bereitstellen. Zur Bereitstellung einer solchen nicht selbsthemmenden Verschraubung können Trapezgewinde genutzt werden, deren Flankenwinkel in der Größenordnung von 30° liegen kann. Nicht selbsthemmende Gewinde sind bevorzugt, um den Gewindering 15 einfach in den Gehäusegrundkörper 11 einschrauben zu können.

Es sei darauf hingewiesen, dass bei Kompressoren für industrielle Anwendungen der Innendurchmesser des Innengewindes 17 des Gehäusegrundkörpers 11 bis zu 3 m betragen kann.

Das Maß des Einschraubens des Gewinderings 15 in das jeweilige Ende des zylinderartigen Gehäusegrundkörpers 11 bestimmt, wie weit der vom Gewindering 15 bereitgestellte Anschlag 14 in den Innenraum des Kompressorgehäuses 10 hineinragt und bestimmt demnach die Relativposition des Anschlags 14 für den Deckel 12.

Der Gewindering 15 ist in seiner im Gehäusegrundkörper 11 eingeschraubten Position am Gehäusegrundkörper 11 des Kompressorgehäuses 10 mit Hilfe eine Verdrehsicherung verdrehgesichert.

Im in Fig. 1 gezeigten Ausführungsbeispiel wird die Verdrehsicherung von mindestens einem Sicherungselement 18 bereitgestellt, welches über eine erste Schraube 19 mit dem Gehäusegrundkörper 11 und über eine zweite Schraube 20 mit dem Gewindering 15 zusammenwirkt. Die erste Schraube 19 erstreckt sich dabei durch das Sicherungselement 18 hindurch und in den Gehäusegrundkörper 11 hinein. Die zweite Schraube 20 erstreckt sich ebenfalls durch das Sicherungselement 18 hindurch in den Gewindering 15 hinein, wobei die zweite Schraube 20 vorzugsweise den Gewindering 15 komplett durchdringt und sich am Deckel 12 abstützt. Über den Umfang können mehrere derartige Sicherungselemente 18, die jeweils mit der ersten Schraube 19 und zweiten Schraube 20 zusammenwirken, verteilt sein, um eine Verdrehsicherung bereitzustellen, die wirkende Momente ausreichend aufnehmen kann. In Fig. 1 sind im Gewindering 15 mehrere Ausnehmungen 21 ausgebildet, um abhängig von der relativen Position des Gewinderings 15 zum Gehäusegrundkörper 11 sowie zum Sicherungselement 19 am Gewindering 15 eine entsprechende Ausnehmung 21 zur Aufnehmung der jeweiligen zweiten Schraube 20 bereitzustellen.

Fig. 2 zeigt eine weitere Ausführungsform eines erfindungsgemäßen Kompressorgehäuses 10, nämlich an einem axialen Ende des Kompressorgehäuses 10, wobei Fig. 2 wie Fig. 1 den zylinderartigen Gehäusegrundkörper 11 mit seinem Innengewinde 17, den Deckel 12 sowie den Gewindering 15 mit seinem Außengewinde 16 zeigt.

Das Ausführungsbeispiel der Fig. 2 unterscheidet sich vom Ausführungsbeispiel der Fig. 1 durch die Ausbildung der Verdrehsicherung, die einen Reibschluss nutzt. So ist im Ausführungsbeispiel der Fig. 2 ein Sicherungsring bzw. ein Sicherungssegmentring 22 vorhanden, wobei der Sicherungssegmentring 22 beispielsweise in eine radial innere Nut 23 des Gewinderings 15 hinein ragt. Erste Schrauben 24 erstrecken sich durch den Sicherungssegmentring 22 hindurch, nämlich durch einen aus der Nut 23 herausragenden Abschnitt desselben, und stützen sich auf dem Deckel 12 ab und drücken den Sicherungssegmentring 22 Deckel 12 weg gegen eine axiale Begrenzungswand der Nut 23.

Am Gewindering 15 ist an einem aus dem zylinderartigen Gehäusegrundkörper 11 herausragenden Abschnitt ein sich nach radial außen erstreckender Vorsprung 25 ausgebildet, durch den sich zweite Schrauben 26 erstrecken. Die zweiten Schrauben 26 stützen sich auf dem Gehäusegrundkörper 11 ab und drücken den Gewindering 15 vom Gehäusegrundkörper 11 weg.

Mit beiden Ausführungsbeispielen kann für den Deckel 12 über den Gewindering 15 ein Anschlag 14 bereitgestellt werden. Die Position des Deckels 12 im Betrieb wird so eindeutig definiert. Eine Verdrehsicherung sichert den Gewindering 15 vor einem ungewollten Verdrehen gegenüber dem Gehäusegrundkörper 11. Obwohl in den Fig. 1 und 2 lediglich ein Ende des Gehäusegrundkörpers 11 gezeigt ist, kann die erfindungsgemäße Lösung an beiden Enden des zylinderartigen Gehäusegrundkörpers 11 zum Einsatz kommen.

Wie bereits ausgeführt, beträgt ein Außendurchmesser des Gewinderings 15 bzw. ein Innendurchmesser des zylinderartigen Gehäusegrundkörpers 11 bis zu 3 m. Daher ist es erforderlich, den Gewindering 15 bei der Montage sowie Demontage desselben am zylinderartigen Gehäusegrundkörper 11 exakt auszurichten und definiert zu führen, um ein Verklemmen desselben bei der Montage und Demontage zu vermeiden.

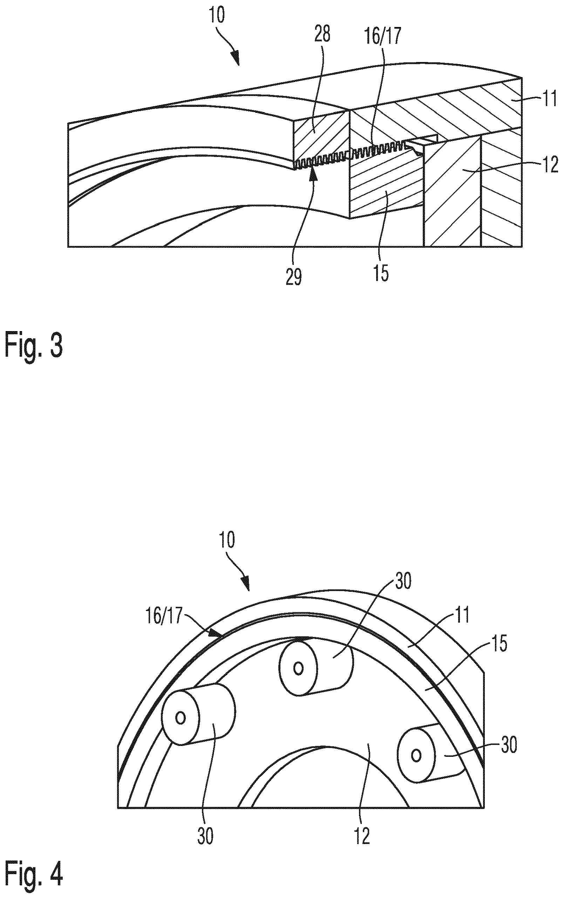

Fig. 3 zeigen Details eines ersten Verfahrens zur Montage und Demontage des Gewinderings 15 an dem zylinderartigen Gehäusegrundkörper 11 des Kompressorgehäuses 10 eines Kompressors. So wird zur Montage und Demontage des Gewinderings 15 in dem in Fig. 3 gezeigten Ausführungsbeispiel an dem Ende des Gehäusegrundkörpers 11, an welchem der Gewindering 15 montiert oder demontiert wird, ein Montagering 28 befestigt, welcher den Gehäusegrundkörper 11 am jeweiligen Ende desselben axial verlängert und ein das Innengewinde 17 des Gehäusegrundkörpers 11 verlängerndes Innengewinde 29 aufweist.

Zur Montage des Gewinderings 15 ist der Montagering 28, der den Gewindering 15 aufnimmt, am Gehäusegrundkörper 11 montiert, und zwar derart, dass sich die Innengewinde 17, 29 vom Gehäusegrundkörper 11 und Montagering 28 vervollständigen, sodass dann der Gewindering 15 ausgehend vom Montagering 29 in das Ende des Gehäusegrundkörpers 11 in die in Fig. 3 gezeigte Position überführt bzw. eingeschraubt werden kann. Soll ausgehend von der in Fig. 3 der Gewindering 15 vom Gehäusegrundkörper 11 demontiert werden, so wird der Gewindering 15 aus dem Gehäusegrundkörper 11 heraus und in den Montagering 18 hineingeschraubt, um dann zusammen mit dem Montagering 28 vom Gehäusegrundkörper 11 entfernt zu werden.

Der Montagering 28 stellt dabei ein Werkzeug zur Durchführung des erfindungsgemäßen Verfahrens bereit, wobei die Erfindung weiterhin den Montagering 28 zur Durchführung des unter Bezugnahme auf Fig. 3 beschriebenen Verfahrens betrifft. Der Montagering 28 ist an einem Ende Gehäusegrundkörpers 11 montierbar und verfügt über ein Innengewinde 29, welches das Innengewinde 17 des Gehäusegrundkörpers 11 verlängert bzw. vervollständigt. Das Innengewinde 29 des Montagerings 28 wird bzw. ist zusammen mit dem Innengewinde 17 des Gehäusegrundkörpers 11 hergestellt.

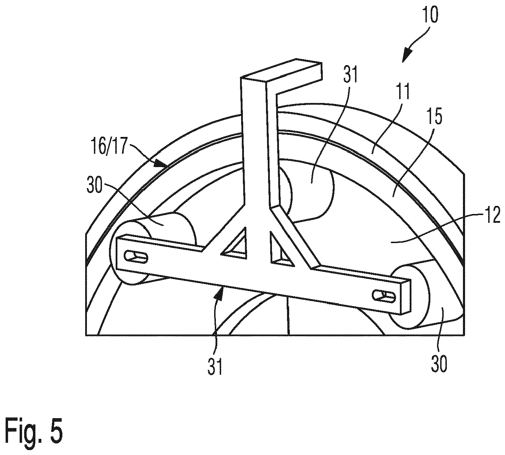

Fig. 4 und 5 zeigen Varianten zur Montage oder Demontage des Gewinderings 15 am oder vom Gehäusegrundkörper 11 des Kompressorgehäuses 10. In Fig. 4 sind am Deckel 12 mehrere rollenartige Montagekörper 30 montiert. Zur Montage des Gewinderings 15 am Gehäusegrundkörper 11 wird der Gewindering 15 auf den rollenartigen Montagekörpern 30 positioniert, die den Gewindering 15 exakt ausrichten, um anschließend in das Kompressorgehäuse 10, nämlich in den Gehäusegrundkörper 11 desselben, eingeschraubt zu werden. Bei der Demontage wird der Gewindering 15 aus dem Gehäusegrundkörper 11 herausgeschraubt und kann dabei auf den rollenartigen Montagekörpern 13 abgelegt bzw. von denselben gehalten werden, um dann den Gewindering 15 nach dem Herausschrauben aus dem Gehäusegrundkörper 11 zu entfernen.

Während in Fig. 4 die rollenartigen Montagekörper 30 am Deckel 12 befestigt sind, zeigt Fig. 5 eine Variante, in welcher die rollenartigen Montagekörper 30 an einer separaten Tragstruktur 31 montiert sind, die dann zur Montage bzw. Demontage des Gewinderings 15 relativ zum zylinderartigen Gehäusegrundkörper 11 ausgerichtet wird.

### Bezugszeichenliste

- 10: Kompressorgehäuse
- 11: Gehäusegrundkörper
- 12: Deckel
- 13: Innenraum
- 14: Anschlag
- 15: Gewindering
- 16: Außengewinde
- 17: Innengewinde
- 18: Sicherungselement
- 19: Schraube
- 20: Schraube
- 21: Ausnehmung
- 22: Sicherungsring/ Sicherungssegmentring
- 23: Nut
- 24: Schraube
- 25: Vorsprung
- 26: Schraube
- 28: Montagering
- 29: Innengewinde
- 30: Montagekörper
- 31: Tragstruktur

## Patentansprüche

1. Kompressorgehäuse (10),
mit einem zylinderartigen Gehäusegrundkörper (11) und mit mindestens einem Deckel (12), der den Gehäusegrundkörper (11) an einem Ende desselben verschließt,
dasselbe zur Bereitstellung eines Anschlags (14) für den jeweiligen Deckel (12) mindestens einen Gewindering (15) mit einem Außengewinde (16) aufweist, der über sein Außengewinde (16) in das jeweilige, ein Innengewinde (17) aufweisende Ende des Gehäusegrundkörpers (11) eingeschraubt ist,
**dadurch gekennzeichnet, dass**
der Gewindering (15) über eine Verdrehsicherung gegenüber dem Gehäusegrundkörper (11) verdrehgesichert ist.

2. Kompressorgehäuse nach Anspruch 1, **dadurch gekennzeichnet, dass** die Verdrehsicherung mindestens ein Sicherungselement (18) aufweist, wobei das jeweilige Sicherungselement (18) über eine erste Schraube (19) mit dem Gehäusegrundkörper (11) und über eine zweite Schraube (20) mit dem Gewindering (15) zusammenwirkt.

3. Kompressorgehäuse nach Anspruch 2, **dadurch gekennzeichnet, dass** sich die erste Schraube (19) in den Gehäusegrundkörper (11) und die zweite Schraube (20) in den Gewindering (15) hinein erstreckt.

4. Kompressorgehäuse nach Anspruch 3, **dadurch gekennzeichnet, dass** sich die zweite Schraube (20) durch den Gewindering (15) hindurch erstreckt und am Deckel (12) abstützt.

5. Kompressorgehäuse nach Anspruch 1, **dadurch gekennzeichnet, dass** die Verdrehsicherung einen Sicherungsring oder einen Sicherungssegmentring (22) aufweist, wobei der Sicherungsring oder der Sicherungssegmentring (22) abschnittsweise in eine radial innere Nut (23) im Gewindering (15) hineinragt, und wobei sich erste Schrauben (24) durch einen aus der radial inneren Nut (23) des Gewindering (25) herausragenden Abschnitt des Sicherungsrings oder des Sicherungssegmentrings (22) hindurch erstecken und am Deckel (12) abstützen.

6. Kompressorgehäuse nach Anspruch 5, **dadurch gekennzeichnet, dass** der Gewindering (15) ein radial äußeren Vorsprung (25) aufweist, wobei sich zweite Schrauben (19) durch den radial äußeren Vorsprung (25) des Gewinderings hindurch erstecken und am Gehäusegrundkörper (11) abstützen.

7. Verfahren zur Montage oder Demontage eines Gewinderings (15) an einem zylinderartigen Gehäusegrundkörper (11) des Kompressorgehäuses nach einem der Ansprüche 1 bis 6,
wobei an dem Ende des Gehäusegrundkörpers (11), an welchem der Gewindering (15) montiert oder demontiert wird, ein Montagering (28) befestigt wird, welcher den Gehäusegrundkörper (11) an dem Ende axial verlängert und ein das Innengewinde (17) des Gehäusegrundkörpers (11) verlängerndes Innengewinde (29) aufweist,
wobei zur Montage des Gewinderings (15) der Montagering (28) den Gewindering (15) aufnimmt und der Gewindering (15) vom Montagering (28) aus in das Ende des Gehäusegrundkörpers (11) eingeschraubt wird,
wobei zur Demontage des Gewinderings (15) der Gehäusegrundkörper (11) den Gewinderings (15) aufnimmt und der Gewindering (15) vom Gehäusegrundkörper (11) aus in den Montagering (28) eingeschraubt wird.

8. Montagering (28) zur Durchführung des Verfahrens nach Anspruch 7, wobei der Montagering ein Innengewinde (29) aufweist, welches das Innengewinde (17) des Gehäusegrundkörpers (11) verlängert.

9. Montagering nach Anspruch 8, **dadurch gekennzeichnet, dass** das Innengewinde (29) desselben zusammen mit dem Innengewinde (17) des Gehäusegrundkörpers (11) hergestellt wird bzw. ist.

10. Verfahren zur Montage oder Demontage eines Gewinderings (15) an einem zylinderartigen Gehäusegrundkörper (11) des Kompressorgehäuses (10) nach einem der Ansprüche 1 bis 6,
wobei am Deckel (12) oder einer separaten Tragstruktur (31) rollenartige Montagekörper (30) montiert werden,
wobei zur Montage des Gewinderings (15) derselbe an den rollenartigen Montagekörpern (30) positioniert wird und anschließend in das Ende des Gehäusegrundkörpers (11) eingeschraubt wird,
wobei zur Demontage des Gewinderings (15) derselbe aus dem Ende des Gehäusegrundkörpers (11) herausgeschraubt und hierbei auf den rollenartigen Montagekörpern (30) positioniert wird.

## Claims

1. A compressor housing (10),
having a cylindrical housing main body (11) and having at least one lid (12), which closes the housing main body (11) at an end of the same,
the same, for providing a stop (14) for the respective lid (12), comprising at least one threaded ring (15) with an external thread (16), which via its external thread (16) is screwed into the respective end of the housing main body (11) having an internal thread (17), **characterized in that** the threaded ring (15) is rotationally locked relative to the housing main body (11) via an anti-rotation lock.

2. The compressor housing according to Claim 1, **characterized in that** the anti-rotation lock comprises at least one locking element (18), wherein the respective locking element (18) interacts, via a first screw (19), with the housing main body (11) and, via a second screw (20), with the threaded ring (15).

3. The compressor housing according to Claim 2, **characterized in that** the first screw (19) extends into the housing main body (11) and the second screw (20) into the threaded ring (15).

4. The compressor housing according to Claim 3, **characterized in that** the second screw (20) extends through the threaded ring (15) and supports itself on the lid (12).

5. The compressor housing according to Claim 1, **characterized in that** the anti-rotation lock comprises a locking ring or a locking segment ring (22), wherein the locking ring or the locking segment ring (22) in portions projects into a radially inner groove (23) in the threaded ring (15), and wherein first screws (24) extend through a portion of the locking ring or of the locking segment ring (22) projecting out of the radially inner groove (23) of the threaded ring (25) and support themselves on the lid (12).

6. The compressor housing according to Claim 5, **characterized in that** the threaded ring (15) comprises a radially outer projection (25), wherein second screws (19) extend through the radially outer projection (25) of the threaded ring and support themselves on the housing main body (11).

7. A method for mounting or demounting a threaded ring (15) on a cylindrical housing main body (11) of the compressor housing according to any one of the Claims 1 to 6,
wherein on the end of the housing main body (11), on which the threaded ring (15) is mounted or demounted, a mounting ring (28) is fastened which axially extends the housing main body (11) at the end and comprises an internal thread (29) extending the internal thread (17) of the housing main body (11),
wherein for mounting the threaded ring (15) the mounting ring (28) receives the threaded ring (15) and the threaded ring (15) is screwed, from the mounting ring (28) into the end of the housing main body (11), wherein for demounting the threaded ring (15) the housing main body (11) receives the threaded ring (15) and the threaded ring (15), from the housing main body (11), is screwed into the mounting ring (28).

8. An mounting ring (28) for carrying out the method according to Claim 7, wherein the mounting ring comprises an internal thread (29) which extends the internal thread (17) of the housing main body (11).

9. The mounting ring according to Claim 8, **characterized in that** the internal thread (29) of the same is produced together with the internal thread (17) of the housing main body (11).

10. A method for the mounting or demounting of a threaded ring (15) on a cylindrical housing main body (11) of the compressor housing (10) according to any one of the Claims 1 to 6,
wherein roller-like mounting bodies (30) are mounted on the lid (12) or a separate support structure (31), wherein for the mounting of the threaded ring (15) the same is positioned on the roller-like mounting bodies (30) and subsequently screwed into the end of the housing main body (11),
wherein for the demounting of the threaded ring (15) the same is unscrewed from the end of the housing main body (11) and in the process positioned on the roller-like mounting bodies (30).

## Revendications

1. Carter de compresseur (10),
comportant un corps de base de carter de type cylindre (11) et comportant au moins un couvercle (12), qui ferme le corps de base de carter (11) à une extrémité de ce dernier,
ce dernier pour fournir une butée (14) pour le couvercle respectif (12) présente au moins une bague filetée (15) avec un filetage externe (16), qui est fixé par l'intermédiaire de son filetage externe (16) dans l'extrémité du corps de base de carter (11) présentant un filetage interne (17),
**caractérisé en ce que** la bague filetée (15) est sécurisée contre une rotation par rapport au corps de base de carter (11) par l'intermédiaire d'un système anti rotation.

2. Carter de compresseur selon la revendication 1, **caractérisé en ce que** le système anti rotation présente au moins un élément de sécurisation (18), dans lequel l'élément de sécurisation respectif (18) coopère par l'intermédiaire d'une première vis (19) avec le corps de base de carter (11) et par l'intermédiaire d'une deuxième vis (20) avec la bague filetée (15).

3. Carter de compresseur selon la revendication 2, **caractérisé en ce que** la première vis (19) s'étend à l'intérieur du corps de base de carter (11) et la deuxième vis (20) s'étend à l'intérieur de la bague filetée (15).

4. Carter de compresseur selon la revendication 3, **caractérisé en ce que** la deuxième vis (20) s'étend à travers la bague filetée (15) et s'appuie sur le couvercle (12).

5. Carter de compresseur selon la revendication 1, **caractérisé en ce que** le système anti rotation présente une bague de blocage ou un segment de bague de blocage (22), dans lequel la bague de blocage ou le segment de bague de blocage (22) dépasse par portions dans une rainure intérieure radiale (23) dans la bague filetée (15), et dans lequel des premières vis (24) s'étendent à travers une portion de la bague de blocage ou du segment de bague de blocage (22) dépassant hors de la rainure intérieure radiale (23) de la bague filetée (25) et s'appuient sur le couvercle (12).

6. Carter de compresseur selon la revendication 5, **caractérisé en ce que** la bague filetée (15) présente une protubérance radiale extérieure (25), dans lequel des deuxièmes vis (19) s'étendent à travers la protubérance (25) radiale extérieure de la bague filetée et s'appuient sur le corps de base de carter (11) .

7. Procédé de montage de démontage d'une bague filetée (15) sur un corps de base de carter (11) de type cylindre du carter de compresseur selon une des revendications 1 à 6,
dans lequel à l'extrémité du corps de bague de carter (11), sur laquelle la bague filetée (15) est montée ou démontée, une bague de montage (28) est fixée, qui prolonge axialement le corps de base de carter (11) sur l'extrémité et présente un filetage intérieur (29) prolongeant le filetage intérieur(17) du corps de base de carter (11),
dans lequel pour le montage de la bague filetée (15) la bague de montage (28) renferme la bague filetée (15) et la bague filetée (15) est vissée à partir de la bague de montage (28) dans l'extrémité du corps de base de carter (11),
dans lequel pour le démontage de la bague filetée (15) le corps de base de carter (11) renferme la bague filetée (15) et la bague filetée (15) est vissée à partir du corps de base de carter (11) dans la bague de montage (28) .

8. Bague de montage (28) pour mettre en oeuvre le procédé selon la revendication 7, dans laquelle la bague de montage présente un filetage intérieur (29), qui prolonge le filetage intérieur (17) du corps de base de carter (11).

9. Bague de montage selon la revendication 8, **caractérisée en ce que** le filetage intérieur (29) de cette dernière est fabriqué conjointement au filetage intérieur (17) du corps de base de carter (11).

10. Procédé de montage ou démontage d'une bague filetée (15) sur un corps de base de carter (11) de type cylindre du carter de compresseur (10) selon une des revendications 1 à 6,
dans lequel sur le couvercle (12) ou une structure porteuse séparée (31) des corps de montage (30) de type rouleau sont montés,
dans lequel dans le montage de la bague filetée (15) cette dernière est positionnée sur les corps de montage de type rouleau (30) et est ensuite vissée dans l'extrémité du corps de base de carter (11),
dans lequel pour le démontage de la bague filetée (15) cette dernière est vissée hors de l'extrémité du corps de base de carter (11) et ce faisant est positionnée sur les corps de montage de type rouleau (30).
